# EUROPÄISCHE PATENTSCHRIFT

(11) **EP 0 657 326 B1**
(45) Veröffentlichungstag und Bekanntmachung des Hinweises auf die Patenterteilung: **30.08.2000**
(21) Anmeldenummer: 94119462.3
(22) Anmeldetag: 09.12.1994
(51) Int. Cl.: B60R 21/13

(54) **Überrollbügel für Kraftfahrzeuge**
Roll bars for motor cars
Arceau de sécurité pour véhicules automobiles

(30) Priorität: 13.12.1993 DE 4342401
(43) Veröffentlichungstag der Anmeldung: 14.06.1995
(73) Patentinhaber: ISE Innomotive Systems Europe GmbH, 51702 Bergneustadt (DE)
(72) Erfinder: Reuber, Gerhard, D-57489 Drolshagen (DE); Roumidis, Dimitrios, D-51702 Bergneustadt (DE); Braun, Achim, D-51588 Nümbrecht (DE)
(74) Vertreter: Fuchs Mehler Weiss & Fritzsche

(56) Entgegenhaltungen:
- EP-A- 0 309 686
- EP-A- 0 362 524
- EP-A- 0 568 858
- DE-C- 3 410 676

## Beschreibung

Die vorliegende Erfindung geht von einem Überrollbügel gemäß dem Oberbegriff des Anspruches 1 aus, wie er durch die EP 0 309 686 A1 bekannt geworden ist. Diese Schritt zeigt einen Überrollbügel, der durch eine vorgespannte Druckfeder in eine ausgefahrene Endposition bringbar ist.

Solche Überrollbügel finden bei Cabriofahrzeugen Verwendung, bei denen aus optischen Gründen auf einen permanenten Überrollschutz verzichtet wird. Je nach Modell kann eine zusätzliche Komfortbetätigung vorgesehen sein, durch welche der Überrollbügel beispielsweise elektromotorisch, in eine gewünschte Position, welche nicht unbedingt der ausgefahrenen Endposition entspricht, gebracht werden kann.

Die Auslösung im Crashfall, d.h. bei Gefahr eines Fahrzeugüberschlags, erfolgt in der Regel durch einen sogenannten Crashmagneten, also einen Elektromagneten, dessen elektrische Spule in einem solchen Crashfall von einem Sensor bestromt wird, so daß der Crashmagnet eine Sperrvorrichtung entriegelt und der Überrollbügel durch die vorgespannte Druckfeder in seine ausgefahrene bzw. ausgeschwenkte Endposition gebracht wird. Elektromagneten haben jedoch die bekannten Nachteile, daß zur Aufbringung einer ausreichenden Stellkraft ein großer Stromfluß mit einer entsprechend großen Spannung erforderlich ist. Trotzdem sind die elektromagnetisch aufbringbaren Kräfte verhältnismäßig klein, so daß die betätigte Sperrvorrichtung keine großen Reibkräfte überwinden kann.

Die Aufgabe der vorliegenden Erfindung liegt darin, einen Überrollbügel zu schaffen, bei welchem eine Auslösung im Crashfall nur eine geringe elektrische Spannung erfordert, die aber zugleich eine in jedem Fall ausreichende Stellkraft zur Verfügung stellt.

Diese Aufgabe wird gelöst durch die kennzeichnenden Merkmale des Hauptanspruchs.

Im Prinzip nutzt die Erfindung also aus, daß zur Zündung eines pyrotechnischen Zündsatzes nur eine geringe Mindestspannung erforderlich ist, welche jedoch durch die plötzliche Gasexpansion eine große Stellkraft hervorruft.

Hiervon zu unterscheiden sind Überrollbügel, die anstelle einer Druckfeder einen hydraulichen, elektropneumatischen oder pyrotechnischen Crash-Antrieb besitzen, wie er durch die DE 34 10 676 C1, EP 0 362 524 A1 sowie durch die DE 37 23 378 A1 bekanntgeworden ist.

Eine nähere Erläuterung vorteilhafter Ausgestaltungen des erfindungsgemäßen Überrollbügels erfolgt nun anhand der Beschreibung der Patent-Zeichnungen.

Es zeigen:
- Fig. 1: eine vorteilhafte Gestaltung eines oberen Teils des erfindungsgemäßen Überrollbügels,
- Fig. 2 bis Fig. 4: vorteilhafte Anordnungen zur pyrotechnischen Entriegelung von Sperrvorrichtungen, deren pyrotechnische Elemente anstelle von Crashmagneten in bekannte Überrollbügel eingebaut werden können.

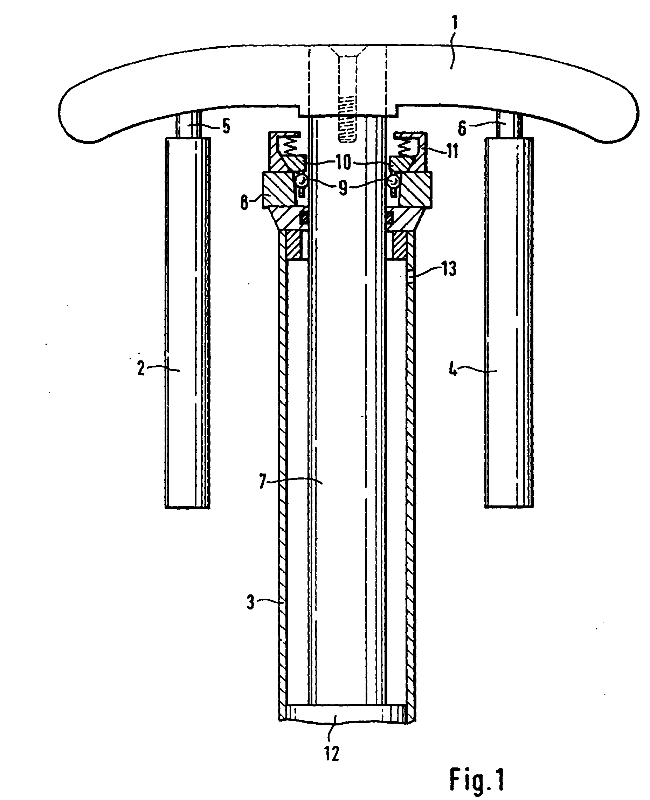

Die in Fig. 1 dargestellte Ausführungsform des oberen Teils eines erfindungsgemäßen Überrollbügels zeichnet sich dadurch aus, daß zur Führung einer Ausfahrbewegung des als Überrollschutz dienenden Querbügels 1 drei Zylindereinheiten 2, 3 und 4 parallel zueinander angeordnet sind. Der mittlere Zylinder 3 weist den größten Durchmesser auf und dient zugleich als Antriebszylinder. Die beiden äußeren Zylinder 2 und 4 dienen lediglich zur axialen Führung und zur Stabilisierung des Querbügels 1 gegen Verformungen. Daher werden die Zylinder 2 und 4 im folgenden als Führungszylinder bezeichnet, während der Zylinder 3 Antriebszylinder genannt wird. Zur Führung ist die zylindrische Form nicht zwingend, sondern es kann auch andere Gestalt gewählt werden wie beispielsweise eckige Querschnitte oder Schienen.

Am Querbügel 1 sind die Führungsstangen 5 und 6 befestigt, welche in den Führungszylindern 2 und 4 axial gleiten. In seiner Mitte ist der Querbügel 1 mit dem Antriebsrohr 7 verschraubt, welches im Antriebszylinder 3 geführt ist. Am dem Querbügel 1 zugewandten Ende des Antriebszylinders 3 ist eine Verriegelungsvorrichtung angebracht, welche verhindert, daß der Überrollbügel aus seiner nicht dargestellten ausgefahrenen Endposition bei einem Fahrzeugüberschlag wieder in den Antriebszylinder 3 hineingedrückt wird. Die Verriegelungsvorrichtung weist eine metallische Hülse 8 auf, deren Innendurchmesser sich vom Querbügel 1 aus zum Antriebszylinder 3 hin konisch verjüngt. Zwischen der inneren Mantelfläche der Hülse 8 und der äußéren Mantelfläche des Antriebsrohres 5 sind Verriegelungskugeln 9 angeordnet, welche bei einer Einfahrbewegung des Antriebsrohres 7, also bei einer Abwärtsbewegung des Antriebsrohres 7, die Hülse 8 mit dem Antriebsrohr 7 verklemmt, so daß eine weitere Abwärtsbewegung verhindert wird. Damit jedoch der Querbügel 1 in seine dargestellte eingefahrene Position gebracht werden kann, sobald der Gefahrenfall vorüber ist, sind Entriegelungskeile 10 vorgesehen, welche zum Antriebsrohr 7 hin jeweils einen ringförmigen Fortsatz haben, in welchem jeweils mit Spiel eine der Verriegelungskugeln 9 gelagert ist. Um die Verriegelungskugeln 9 aus der Verklemmung zu lösen, wird eine Entriegelungsklammer 11 radial zusammengedrückt, so daß ihr sich zum Antriebsrohr 7 hin verjüngender Innendurchmesser sich unter die Entriegelungsteile 10 schiebt und die Verriegelungskugeln 9 anhebt. Hierdurch geraten die Verriegelungskugeln 9 in einen Bereich, in welchem der Innendurchmesser der Hülse 8 zu groß ist, um eine Verklemmung zwischen dem Antriebsrohr 7 und der Hülse 8 zu bewirken. Der Querbügel 1 kann wieder in seine eingefahrene Position gebracht werden. Am unteren Ende der Abbildung ist das Antriebsrohr 7 zu einem dicht im Antriebszylinder 3 geführten Kolben 12 verdickt.

Damit aus dem zwischen dem Antriebsrohr 7 und dem Antriebszylinder 3 angeordneten Ringraum bei einer Abwärtsbewegung des Kolbens 12 die vorhandene Luft verdrängt werden kann, weist der Antriebszylinder 3 in der Nähe der Verriegelungsvorrichtung eine radial zur Atmosphäre führende Verdrängungsbohrung 13 auf.

Die dargestellte Anordnung hat den Vorteil, daß nur ein Antriebszylinder benötigt wird, so daß zum Antrieb des Überollbügels nur ein einzelnes Antriebssystem ausreicht.

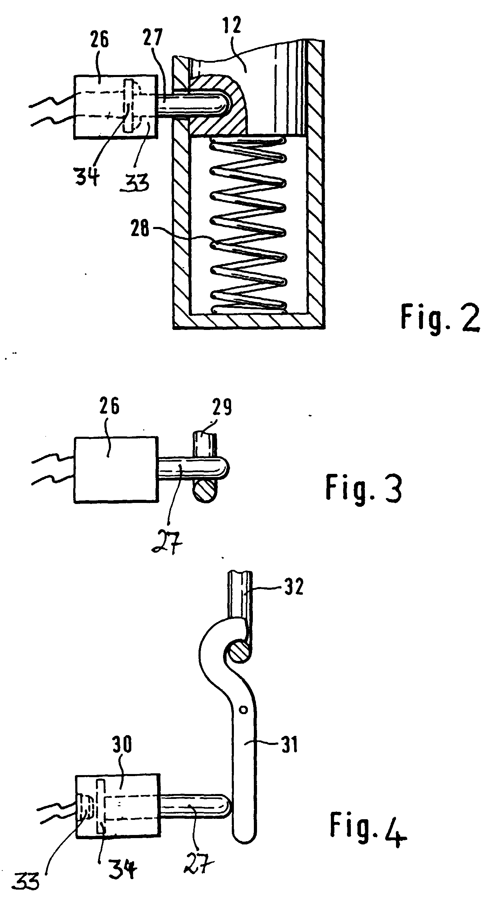

Zum Antrieb dient, wie in Fig. 2 dargestellt, mindestens eine vorgespannte Druckfeder 28, die den Kolben 12 des Antriebsrohres anliegt, und die durch eine Ver- und Entriegelungseinrichtung im vorgespannten Zustand gehalten wird. Diese Einrichtung wird im Gefahrenfall sensorgesteuert entriegelt, wobei erfindungsgemäß die Entsperrung der Druckfeder 28 vermittels eines pyrotechnischen Zündsatzes 33 ausgelöst wird.

In den Fig. 2 bis 4 ist schematisch dargestellt, wie komplette pyrotechnische Schalter zur Ver- und Entriegelung des Überrollbügels verwendet werden können.

In Fig. 2 findet eine sogenannte stifteinziehende Patrone 26 Verwendung, deren Stift 27 im Normalfall - wie dargestellt - direkt im Eingriff mit dem Antriebsrohr 12 des Überrollbügels steht. Bei Überschlagsgefahr wird an den in der Patrone 26 enthaltenen pyrotechnischen Zündsatz 33 eine elektrische Spannung angelegt, so daß innerhalb der Patrone 26 um den Kolben 34 des Stiftes 27 herum eine schnelle Gasexpansion erfolgt, deren Kraft den Stift 27 in das Gehäuse 26 drückt und damit die Druckfeder 28 entriegelt

Es ist jedoch nicht erforderlich, daß eine solche stifteinziehende Patrone mit dem Überrollbügel selbst in Eingriff steht. Sie kann auch, wie in Fig. 3 dargestellt, eine bisher gebräuchliche Kombination von Crashmagnet und Verriegelungshebel ersetzen, indem der Stift 27 der Patrone 26 mit einem am Überrollbügel befestigten Glied 29 in Eingriff steht, welches bei bisherigen Überrollbügelkonstruktionen von einem Verriegelungshebel an einer Ausfahrbewegung behindert wird.

In Fig. 4 ersetzt eine sogenannte stiftausstoßende Patrone 30 einen Crashmagneten, welche vermittels des Stiftes 27, der nach Zündung des pyrotechnischen Zündsatzes 33 und Aufbau des Gasdruckes hinter dem Kolben 34 aus der Patrone ausgestoßen wird, den Verriegelungshebel 31 umschwenkt, so daß das mit dem Überrollbügel verbundene Glied 32 freigegeben wird.

### Bezugszeichenliste

- 1: Querbügel
- 2: Führungszylinder
- 3: Antriebszylinder
- 4: Führungszylinder
- 5: Führungsstange
- 6: Führungsstange
- 7: Antriebsrohr
- 8: Hülse
- 9: Verriegelungskugeln
- 10: Entriegelungskeile
- 11: Entriegelungsklammer
- 12: Kolben
- 13: Verdrängungsbohrung
- 26: Patrone
- 27: Stift
- 28: Druckfeder
- 29: Glied
- 30: Patrone
- 31: Verriegelungshebel
- 32: Glied
- 33: pyrotechnischer Zündsatz
- 34: Kolben

## Patentansprüche

1. Überrollbügel für ein Kraftfahrzeug, welcher zumindest bei Gefahr eines Fahrzeugüberschlags durch mindestens eine vorgespannte Druckfeder (28) in eine ausgefahrene oder ausgeschwenkte Endposition bringbar ist, **dadurch gekennzeichnet,** daß die Ausfahr- oder Ausschwenkbewegung bei Überschlagsgefahr durch Entsperrung der Druckfeder (28) vermittels eines pyrotechnischen Zündsatzes (33) ausgelöst wird.

2. Überrollbügel nach Anspruch 1, **dadurch gekennzeichnet,** daß der pyrotechnische Zündsatz (33) in oder an einer im wesentlichen zylindrischen Kammer (26, 30) angeordnet ist, welche an einer Stirnseite von einem axial verschiebbaren Kolben (34) begrenzt ist, der mit einem Stift (27) verbunden ist, welcher mit einer verriegelnden Sperre (27, 12; 27, 29; 31, 32) in Wirkverbindung steht, die den Überrollbügel im Normalfall, also bei Abwesenheit einer Überschlagsgefahr, in einer eingefahrenen Endlage mit vorgespannter Druckfeder (28) hält.

3. Überrollbügel nach Anspruch 2, **dadurch gekennzeichnet,** daß der Stift (27) im Normalfall selbst in Wirkeingriff mit einem Teil (Kolben 12, Glied 29) des Überrollbügels steht, und der Zündsatz (33) so in Bezug auf den Kolben (34) in der Kammer (26) angeordnet ist, daß der Stift (27) unter Lösen der Wirkverbindung bei Überschlagsgefahr eingezogen wird.

4. Überrollbügel nach Anspruch 2, **dadurch gekennzeichnet,** daß im Normalfall ein schwenkbarer Verriegelungshebel (31) mit einem Teil (Glied 32) des Überrollbügels im Wirkeingriff steht und der Zündsatz (33) so in Bezug auf den Kolben (34) in der Kammer (30) angeordnet ist, daß der Stift (27) bei Überschlagsgefahr unter Verschwenken des Verriegelungshebels (31) und Aufhebung der Wirkverbindung ausgestoßen wird.

## Claims

1. A roll bar for a motor vehicle, which can be brought into an extended or swivelled-out end position by at least one pre-loaded compression spring (28) at least when there is a danger of the vehicle's overturning, **characterised in that** the extending or swivelling-out movement is triggered, when there is a danger of overturning, by releasing the compression spring (28) by means of a pyrotechnic ignition composition (33).

2. A roll bar according to claim 1, **characterised in that** the pyrotechnic ignition composition (33) is arranged in or at a substantially cylindrical chamber (26, 30) which is delimited at one end by an axially displaceable piston (34) connected to a pin (27) which is in operative connection with a locking device (27, 12; 27, 29; 31, 32) which, in normal circumstances, that is to say, in the absence of a danger of overturning, holds the roll bar in a retracted end position with the compression spring (28) pre-loaded.

3. A roll bar according to claim 2, **characterised in that**, in normal circumstances, the pin (27) is itself in operative engagement with a part (piston 12, member 29) of the roll bar, and the ignition composition (33) is so arranged in the chamber (26) in relation to the piston (34) that, when there is a danger of overturning, the pin (27) is retracted, releasing the operative connection.

4. A roll bar according to claim 2, **characterised in that**, in normal circumstances, a pivoted locking lever (31) is in operative engagement with a part (member 32) of the roll bar, and the ignition composition (33) is so arranged in the chamber (30) in relation to the piston (34) that, when there is a danger of overturning, the pin (27) is ejected, swivelling the locking lever (31) and undoing the operative connection.

## Revendications

1. Arceau de sécurité pour véhicule automobile qui peut être placé dans une position extrême, sortie par translation ou sortie par pivotement, par au moins un ressort de compression précontraint (28), du moins en présence d'un risque de retournement du véhicule, caractérisé en ce que le mouvement de sortie par translation ou par pivotement en présence d'un risque de retournement est déclenché par le déblocage du ressort de compression (28) au moyen d'une composition explosive pyrotechnique (33).

2. Arceau de sécurité selon la revendication 1, caractérisé en ce que la composition explosive pyrotechnique (33) est disposée dans ou contre une chambre sensiblement cylindrique (26, 30) qui est limitée, à un côté frontal, par un piston (34) pouvant coulisser axialement, qui est relié à une tige (27), laquelle est en liaison fonctionnelle avec un arrêt de verrouillage (27, 12 ; 27, 29 ; 31, 32) qui, dans le cas normal, c'est-à-dire en l'absence d'un risque de retournement, retient l'arceau de sécurité dans une position extrême rentrée dans laquelle le ressort de compression (28) est précontraint.

3. Arceau de sécurité selon la revendication 2, caractérisé en ce que, dans le cas normal, la tige (27) est en prise fonctionnelle avec une partie (piston 12, élément 29) de l'arceau de sécurité, et la composition explosive (33) est disposée dans la chambre (26) dans une position relative par rapport au piston (34) telle qu'en présence d'un risque de retournement, la tige (27) soit rétractée en supprimant la liaison fonctionnelle.

4. Arceau de sécurité selon la revendication 2, caractérisé en ce que, dans le cas normal, un levier de verrouillage pivotant (31) est en prise fonctionnelle avec une partie (élément 32) de l'arceau de sécurité, et la composition explosive (33) est disposée dans la chambre (30), dans une position relative par rapport au piston (34) telle qu'en présence d'un risque de retournement, la tige (27) soit mise en extension avec pivotement du levier de verrouillage (31) et suppression de la liaison fonctionnelle.
